# EUROPEAN PATENT APPLICATION

(11) **EP 4 715 581 A1**
(43) Date of publication of application: **25.03.2026**
(21) Application number: 24306561.2
(22) Date of filing: 24.09.2024
(51) Int. Cl.: G06F 9/38

(54) **INTERRUPT REGISTER STACKING WITHIN A DATA PROCESSING SYSTEM**

(71) Applicant: NXP B.V., 5656 AG Eindhoven (NL)
(72) Inventor: Herber, Christian, 31023 Toulouse (FR); Brelot, Jean-Baptiste, 31023 Toulouse (FR)
(74) Representative: Miles, John Richard

(57) **Abstract**

A processor includes fetch circuitry configured to fetch instructions and a speculation control circuit. The fetch circuitry is configured to, in response to a first interrupt received by the processor, fetch a first interrupt handler instruction for the received first interrupt. The speculation control circuit is configured to, in response to the first interrupt received by the processor, begin speculative pushing of registers onto a memory stack in accordance with a predetermined register order prior to completion of the fetch of the first interrupt handler instruction for the first interrupt, in which a register tracking value is updated with each speculative push.

## Description

### Background

### Field

This disclosure relates generally to data processing systems, and more specifically, to interrupt register stacking within a data processing system.

### Related Art

Within data processing systems, interrupt execution typically requires the saving and restoring of registers. The saving and restoring of registers, though, directly impacts the latency of interrupt processing. In one current solution, a hardware based saving and restoring of registers is implemented in which all registers (including a fixed subset of the general purpose registers (GPRs)) are saved and restored each time. This typically results in higher latencies, especially if fewer than all registers are needed by the interrupt handler. While tail chaining (which refers to switching from one handler to the next within an intervening store and save) and late preemption (which refers to changing the handler to be executed while storing the registers) may help mitigate some of the increased latency, this hardware mechanism tends to adversely impact processor performance. In another current solution, a software based implementation to save and restore registers may be used, in which the number of registers stored and restored can be software defined, which may provide for improved flexibility and possible reduced latency. However, with this type of software mechanism, it is not possible to implement tail chaining nor late preemption. Therefore, a need exists for improved register stacking during interrupt processing which may therefore result in improved processor performance.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in diagrammatic form, a main program interrupted by two interrupts, in accordance with one embodiment of the present invention.
FIG. 2 illustrates, in block diagram form, a data processing system in accordance with an embodiment of the present invention.
FIGs. 3 and 4 illustrate, in flow diagram form, methods for processing interrupts, in accordance with an embodiment of the present invention.
FIG. 5 illustrates a timing diagram of an interrupt execution, in accordance with an embodiment of the present invention.

### Detailed Description

As indicated above, interrupt processing typically requires register stacking (which refers to the saving, i.e. pushing, and restoring, i.e. popping, of registers). In one aspect, interrupt push and pop instructions (ipush and ipop) are implemented which stack a configurable number of registers and adjust the stack pointer accordingly for executing an interrupt handler. In one embodiment, each ipush or ipop instruction pushes or pops, respectively, a specified number of registers in a fixed predetermined order, in which a register tracking value (xptr) tracks the pushing and popping of the registers. In this manner, through the use of this register tracking value, registers can be speculatively pushed onto the stack even prior to receiving a first handler instruction. This speculative pushing may also allow for improved operation of tail chaining and late preemption.

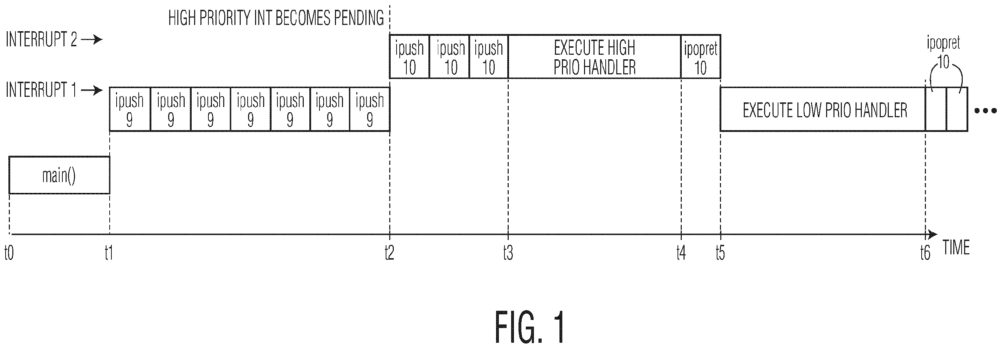

FIG. 1 illustrates, in diagrammatic form, a main program (labeled "main") interrupted by a first interrupt (interrupt 1) followed by a second interrupt (interrupt 2) which has a higher interrupt priority as compared to interrupt 1, in accordance with an embodiment of the present invention. As illustrated in FIG. 1, starting at time t0, the main program is executing when, at time t1, interrupt 1 is received. It is assumed that the handler for interrupt 1 requires nine registers (in which these registers include general purpose registers (GPRs) and may also include status and control registers (CSRs)). Therefore, an ipush instruction is executed which intends to push the nine registers onto the stack prior to executing the handler for interrupt 1. However, at time t2, when only seven of the nine registers have been pushed onto the stack, interrupt 2 with higher priority is received. Therefore, this situation illustrates a late preemption since the handler to be executed is changed to the handler of the higher priority interrupt prior to completing the storing of the registers for current handler.

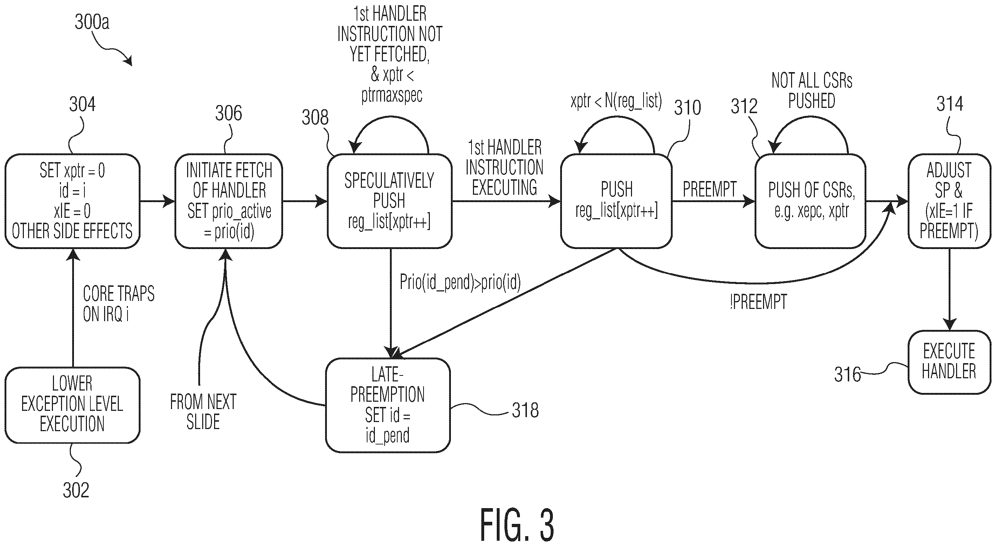

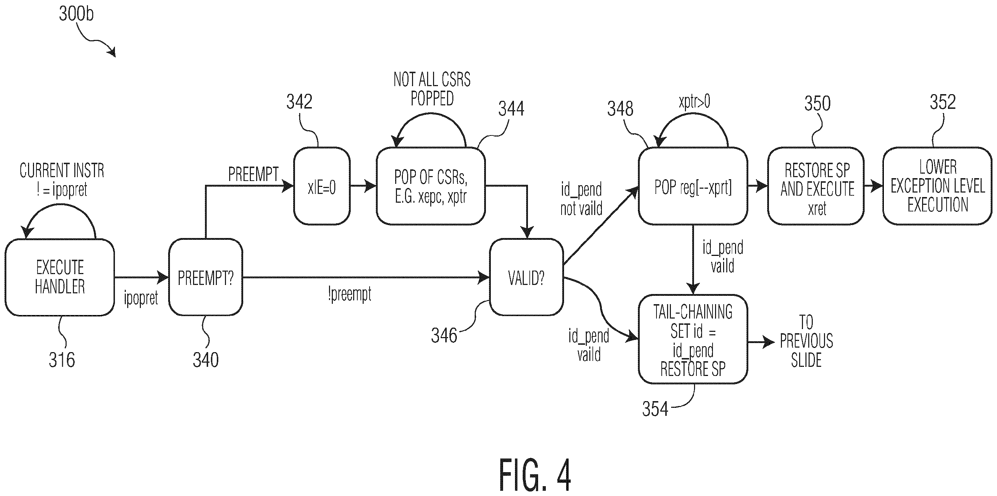

In this example, it is assumed that interrupt 2 requires 10 registers. With use of the register tracking value (xptr), as will be described in more detail below, it is known that seven registers were already pushed onto the stack therefore, only three more registers need to be pushed in preparation for executing the handler for interrupt 2. Therefore, after the push of the remaining 3 registers is completed, at time t3, the interrupt handler for interrupt 2 (labeled as high prio handler) is executed. Afterwards, at time t4, an interrupt pop and return instruction (ipopret) is executed. Typically, this would result in popping the ten registers used by the handler for interrupt 2 and returning back to the point in execution when interrupt 2 was received. In the current example, though, tail chaining is implemented in which, due to the register tracking value , it is known that nine of the ten registers is needed for the handler for interrupt 1. Therefore, only one register is popped with ipopret, and execution resumes with executing the handler for interrupt 1 (labeled as low prio handler) at time t5. At the completion of the handler, at time t6, an ipopret instruction is used to pop the nine registers used by the handler for interrupt 1 and execution is returned back to the main program at the point it was first interrupted by interrupt 1. In these examples, further efficiency is gained by implemented speculative pushing of the registers for each of the handlers, prior to completing the fetch of the first handler instruction. This aspect will be further described in reference to FIGs. 3 and 4 below.

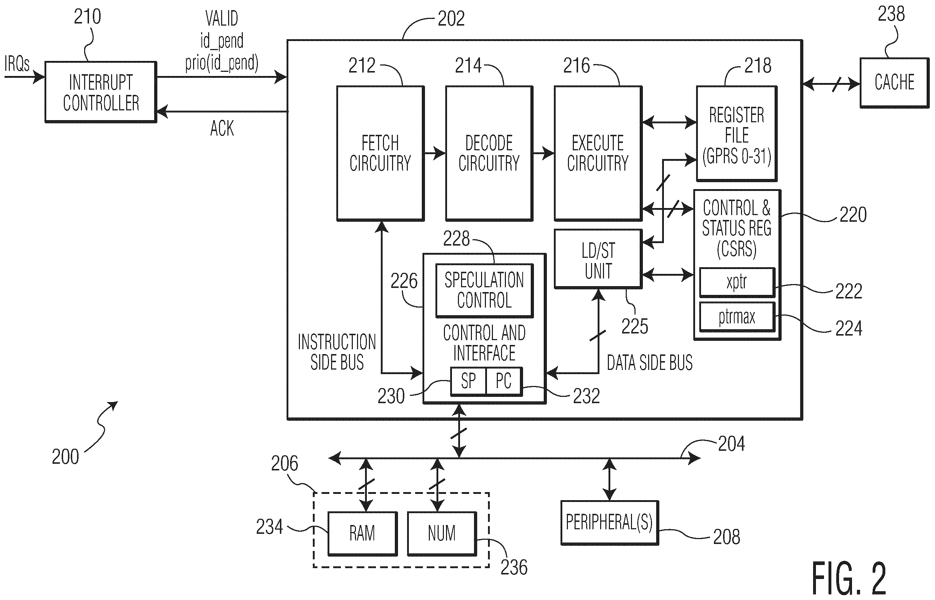

FIG. 2 illustrates, in block diagram form, a data processing system 200 in accordance with an embodiment of the present invention. Data processing system 200 includes a processor 202 (e.g. a core or central processing unit (CPU)), an interrupt controller 210, a cache 238, a system interconnect 204, memories 206, and peripheral(s) 208. Each of processor 202, memories 206 and peripheral(s) 208 are bidirectionally coupled to system interconnect 204, which may be implemented as a, e.g., a system bus, cross-bar switch, interconnect fabric, etc. Memories 206 may include any number and type of memories, including, e.g., a random access memory (RAM) 234 and a non-volatile memory (NVM) 236. Peripheral(s) 208 can include any type and number of peripherals. Cache 238 may be a tightly coupled cache which is bidirectionally coupled to processor 202, so as to communicate directly with processor 202 without needing to communicate via system interconnect 204. Alternatively, cache 238 may be bidirectionally coupled to system interconnect 204 to communicate with processor 202 and memories 206.

Interrupt controller 210 may receive interrupts from within data processing system 200 as interrupt requests (IRQs), which may correspond to software or hardware IRQs, as known in the art, and distributes the interrupts to processor 202. In one embodiment, interrupt controller 210 may be included within processor 202. In one embodiment, interrupt controller 210 may distribute interrupts based on received IRQs to other modules within data processing system 200. For example, system 200 may include any number of cores, in which IRQs may be made to any of the cores.

In one embodiment, all of data processing system 200 is implemented on a single integrated circuit. However, in alternate embodiments, all or portion of system 200 may be in separate integrated circuits. For example, any of the memories, such as NVM 236, may be a separate integrated circuit. Note that system 200 may include additional or fewer elements than those illustrated in FIG. 1.

Processor 200 includes fetch circuitry 212, decode circuitry 214, execute circuitry 216, a load/store (LD/ST) unit 224, a register file 218 with 32 GPRs (GPR0-GPR31), control and status registers (CSRs) 220, and control and interface circuitry 226, in accordance with one embodiment of the present invention. Control and interface circuitry 226 is coupled to each of fetch circuitry 212, decode circuitry 214, execute circuitry 216, register file 218, CSRs 220, and may include a bus interface unit (BIU) to communicate with system interconnect 204. Control and interface circuitry 226 also includes a speculation control circuit 228 and storage circuitry which stores a stack pointer (SP) and a program counter (PC). Note that, in an alternate embodiment, the SP can be stored elsewhere within processor 202, such as within one of the GPRs. Similarly, the PC can be stored elsewhere within processor 202. Register file 218 may include any number of GPRs (in which, in the illustrated embodiment, register file 218 includes 32 GPRs). CSRs 220 includes storage circuitry (e.g. one or more registers) to store the register tracking value (xptr) 222 and a max value for the register count (ptrmax) 224. (As will be described below, xptr allows speculation control circuit 228 to track the stacked registers and may correspond to a count value of a counter within speculation control 228 which tracks pushed and popped registers or to a current pointer value of a pointer of a register list to track pushed and popped registers.) Note that CSRs 220 may include any number of registers and store different types of information, such as the value of the PC when an interrupt is taken (xepc). In an alternate embodiment, ptrmax 224 can instead be stored elsewhere, such as in speculation control circuit 228.

In operation, fetch circuitry fetches instructions for execution from memory (e.g. from memories 206, such as from NVM 236). The instruction addresses can be sent, via control and interface 226, to system interconnect 204, and the instructions can be received via control and interface 226 from memory and stored within, for example, an instruction buffer within fetch circuitry 212. A next instruction for execution can then be provided to decode circuitry 214 which decodes the instruction and provides the decoded instruction for execution to execute circuitry 216. Execute circuitry 216 may include, for example, any number of execution units, in which the GPRs can be accessed, as needed, during execution. Also, LD/ST unit 224 may load data into the GPRs, as needed, from memory (such as from memories 206) and store data from the GPRs back to memory.

Note that fetch circuitry 212 can fetch and load instructions from cache 238 if the fetched instructions are resident in the cache (e.g. in response to a cache hit), and, if not in the cache (e.g. in response to a cache miss), the instructions must be loaded from the corresponding backing store for cache 238 (e.g. NVM 236) via system interconnect 204, which takes much longer as compared to receiving the instructions from the cache. Similarly, LD/ST unit 224 can load data into the GPRs from cache 238 if the requested data is resident in the cache (e.g. in response to a cache hit), and, if not in the cache (e.g. in response to a cache miss), needs to go through system interconnect 204 to obtain the data from the corresponding backing store.

In one embodiment, the stack used during program execution is stored in RAM 234, in which the SP indicates the top of the stack. Fetch circuitry 212, decode circuitry 214, and execute circuitry 216 implement an instruction pipeline of processor 202. Note that the instruction pipeline of processor 202 operates as known in the art, and control and interface 226 includes control circuitry which controls the instruction pipeline, as needed. Further details of operation of processor 202 will be described, as needed, in reference to the interrupt processing described herein. Operation of speculation control circuit 228 will also be described in more detail below, in which speculation control circuit 228 performs speculative pushing (e.g. storing) of registers from register file 218 or CSRs 220 (or both) onto the stack based on a fixed order of registers, using xptr 222 to track the pushing and popping of registers and ptrmax 224 to control the speculative pushing, as needed.

Interrupt controller 210 operates to provide an valid interrupt to processor 202 based on a received IRQ, in which the valid interrupt is referred to as a pending interrupt for processor 202 and has a corresponding ID, id_pend. The pending interrupt also has a corresponding interrupt priority, prio(id_pend). Note that interrupt priorities can be assigned and handled in a variety of different ways, as known in the art. The focus here will be the comparison of two priorities to determine whether a later received interrupt should be allowed to preempt a current interrupt, as will be described in more detail below. However, any known methods may be used to determine if a received interrupt has greater priority than a current interrupt. When a pending interrupt provided by interrupt controller 210 is accepted by processor 202, processor 202 returns an acknowledgement (ack) and fetch circuitry 214 of processor 202 fetches the corresponding interrupt handler, in which each instruction of the interrupt handler is decoded and executed by decode circuitry 214 and execute circuitry 216, respectively, of processor 202. The first (i.e. starting) instruction of the handler may include an ipush instruction and the final (i.e. ending) instruction of the handler may include an ipop instruction (such as an ipopret instruction). In the embodiments herein, each of the ipush and ipop define a register list (reg_list), a stack adjustment (stack_adj), and a preempt parameter (preempt). For example, referring to ipush instruction as an example, the form for the instruction is as follows:
ipush {reg_list}, -stack_adj, preempt

In the above example, the reg_list is provided as a 4-bit value (reg_list[3:0]) which selects one of 16 choices of which set of GPRs to save. Each choice therefore saves a corresponding number of registers (identified as N(reg_list), which indicates a number of registers needed by the handler handling the interrupt). For example, as illustrated in the table below, each value of reg_list[3:0] has a corresponding set of GPRs and a corresponding number of registers N(reg_list):

| Reg_list[3:0] | GPRs: | N(reg_list) |
|---|---|---|
| 0 | 1 | 1 |
| 1 | 1, 5 | 2 |
| 2 | 1, 5, 6 | 3 |
| 3 | 1, 5-7 | 4 |
| 4 | 1, 5-7, 10 | 5 |
| ... | ... | ... |
| 11 | 1, 5-7, 10-17 | 12 |
| 12 | 1, 5-7, 10-17, 28 | 13 |
| ... | .. | ... |
| 15 | 1, 5-7, 10-17, 28-31 | 16 |

As seen in the above table, the 4-bit value of reg_list identifies a defined set of registers (which includes a defined number of registers, in a defined order). For example, if the value of reg_list is 4, then 5 registers are pushed (stored to the stack) in the defined order, starting with GPR1, then GPR5, GPR6, GPR7, and GPR 10. Therefore, upon execution of the ipop instruction, a stack frame is created for the proper number of registers provided by the corresponding N(reg_list), in which additional stack space can be allocated by subtracting the stack_adj ("-stack_adj," which may be in multiples of a block size, e.g. 16 bytes). Further, each time a GPR register is pushed to the stack, xptr is incremented by one. If preempt is set to one, then, in addition to storing the appropriate GPRs, the CSRs which would be overwritten by a preemption are also stored (e.g. xepc (the value of the PC when the exception occurred), xptr, etc.). Also, if preempt is one, interrupts are enabled. If preempt is zero, then the CSRs are not stored, and interrupts are not enabled.

Note that regardless of the value of reg_list provided in the ipush instruction, the GPRs are always pushed in the same fixed order. That is, the total number of registers pushed with each value of reg_list may vary, but the order of the registers does not, with each increasing value of reg_list simply adding one or more additional registers to be pushed in accordance with the fixed order. Note that each increasing value of reg_list can indicate additional registers to be pushed but does not remove any registers from the previous value of reg_list. That is, reg_list[X] = reg_list[X-1] + additional registers. For example, reg_list[12] = reg_list[11] + GPR 28 = GPR1, GPRs 5-7, GPRs 10-17, GPR 28. As will be seen below, this fixed ordering for each of the group of registers identified by the value of reg_list allows for the speculative pushing of registers.

The form of the ipop or ipopret instruction is analogous to the ipush instruction, and may have the following form:
ipopret {reg_list}, stack_adj, preempt

Note that the ipopret operates analogously in which the CSRs (including xptr) are first selectively popped based on preempt, and then a number of GPRs are popped in order based on reg_list. For example, if preempt is one, interrupts are disabled and the CSRs are popped (e.g. loaded back from the stack) into CSRs 220. Next, if the value of reg_list is e.g., 4, then the 5 GPRs are popped in the reverse order, starting with GPR10, then GPR7, GPR6, GPR5, and GPR1. Each time a GPR is popped (loaded back from the stack), xptr is decremented. If the stack pointer needs adjusting, then again the stack pointer can be adjusted by adding back stack_adj. After all the registers (GPRs, and CSRs if preempt = 1) are popped, the return is executed to return execution to xepc (the value of the PC when the exception was taken).

Note that in the table above, only GPRs are referenced by the value of reg_list. However, in alternate embodiments, the values of reg_list may also include registers which are not GPRs, such as floating point or vector registers. Further, in alternate embodiments, reg_list can be implemented using any number of bits, as needed, to define the sets of registers to be pushed or popped, depending, for example, on how many total registers are available to be pushed or popped. Alternatively, other methods may be used to map a value for reg_list to a predetermined set of registers, each with an increasing number of registers. However, regardless of which method is used to encode the number of registers, as the number of registers to be pushed increases, the particular order in which the registers are pushed (and thus subsequently popped) remains fixed.

FIGs. 3 and 4 illustrates, in flow diagram form, a method 300a corresponding to a push portion of processing an interrupt and a method 300b corresponding to a pop portion of processing an interrupt, in accordance with an embodiment of the present invention. Therefore, methods 300a and 300b, together, correspond to a method 300 for processing an interrupt, in accordance with an embodiment of the present invention.

Beginning with portion 300a of FIG. 3, at block 302, code with a lower exception level than a received interrupt (IRQ i) is being execution. Processor 202 traps on the received interrupt, in which, at block 304, processor 202 accepts interrupt i by clearing xptr to zero (xptr=0), setting the id of the current accepted interrupt to i (id = i), and disabling interrupts (in which the Interrupt Enable (xIE) is negated, xlE = 0). Other actions may occur as well at the time the interrupt is accepted. Then, at block 306, a fetch of the interrupt handler is initiated. Also, the currently active priority (prio_active) is set to the priority of the accepted interrupt (prio_active = prio(id)). Fetching the interrupt handler is performed by fetch circuitry 212 and includes obtaining the handler from a handler address indicated by interrupt i (in which the handler may include one or multiple instructions, beginning with an ipop instruction). Therefore, fetching the interrupt handler takes time (by going to cache 238 to fetch the handler, or, if the handler address misses in the cache, requiring more time to go out to memory via system bus 204 to obtain the handler). However, as illustrated in FIG. 3, in response to receiving interrupt i, in addition to fetch circuitry 212 initiating the fetch of the handler, speculative control circuit 228 initiates a speculative push of registers onto the stack (prior to having received the handler). The speculative pushing is done corresponding to the fixed order identified by reg_list, as was described above. In the example of the above table, the fixed register order associated with reg_list is GPR 1, 5-7, 10-17, and 28-31.

With the speculative pushing of registers, at block 308, each register associated with reg_list is sequentially pushed onto the stack in accordance with the fixed register order, in which the register tracking value is updated with each speculative push. Note that in one embodiment, xptr (which is representative of a count value of registers) is implemented as a pointer to the fixed order of GPRs. Therefore, with each push, the pointer value is incremented by one (xptr++) to point to the next GPR to be pushed in accordance with the fixed register order. As indicated by the arrow returning to block 308, the sequentially pushing of a next GPR continues while the value of xptr (&xptr) is less than a specified maximum value (ptrmaxspec) and the fetch of the first handler instruction has not yet been completed (i.e. the first handler instruction has not yet been received). That is, in one embodiment, a value may be stored for ptrmaxspec which indicates a maximum number of registers to be speculatively pushed. This number can be programmed, for example, into a registers of CSRs 220 or can be stored elsewhere, such as with in speculative control 228. If ptrmaxspec has been reached, even if the fetch of the first handler instruction has not yet been completed, speculative pushing stops and processing waits at block 308 until the fetch of the first handler instruction is complete. However, if ptrmaxspec has not yet been reached, speculative fetching ends when the first handler instruction has been received. In an alternate embodiment, ptrmaxspec may not be used in which speculative fetching simply continues until the first handler instruction has been received (or until the full list of GPRs indicated by reg_list has been pushed).

Once the first handler instruction has been fetched and received by fetch circuitry 212, the first hander instruction is processed (which includes decoding and executing the instruction by the pipeline of processor 202). The first handler instruction is an ipush instruction and therefore method 300a proceeds to block 310 in which any remaining GPRs of the reg_list specified by the ipush instruction of the handler are pushed, incrementing xptr with each push. That is, pushing the GPRs continues while xptr is less than N(reg_list). For example, if the value of reg_list is 5, and only 2 registers (GPR1 and GPR5) were pushed during the speculative pushing, the 3 additional registers (GPRs 6, 7, and 10) would then be pushed in block 310. The pushes performed at block 310 are no longer considered speculative (i.e. are non-speculative) because it is now known which registers are needed due to having begun executing the first handler instruction. Since the registers are speculatively pushed in accordance with the fixed register order, it is known that regardless of the value of reg_list in the ipush instruction, the speculative pushing begins by pushing the correct registers in the correct order, and the pushing of registers defined by the ipush instruction can then properly continue from where the speculative pushing left off.

After block 310, if the value of preempt of the ipush instruction is asserted to one ("preempt"), then, at block 312, the CSRs are also pushed onto the stack (including, e.g., xepc and xptr). If the value of preempt is negated to zero ("!preempt"), then method 300a continues from block 310 to block 314, without pushing the CSRs. Therefore, the CSRs are selectively pushed onto the stack based on the value of the preempt field of the ipush instruction. At block 314, the SP is adjusted as needed and, if preempt is one, xIE=1 to again enable interrupts. After block 314, the interrupt handler is executed at block 316.

While GPRs are being speculatively pushed onto the stack (at block 308) or while the remaining GPRs are being non-speculatively pushed, a late preemption may occur. For example, an interrupt may be received from interrupt controller 210 (id_pend) which has a priority greater than the priority of the interrupt currently being processed (e.g. prio(id_pend) > prio(id)). If this is the case, method 300a proceeds from either block 308 or block 310 to block 318 in which late-preemption results in setting the current interrupt to the newly received interrupt (id = id_pend). In this case, the method proceeds to block 306 in which the priority of the currently active interrupt is reset to the priority of the preempting interrupt (prio_active = prio(id), in which id has already been reset to id_pend in block 318). Note that, in this situation of late preemption, the value of xptr is not reset to zero or changed. It is still at the last value it was when block 308 or 310 was interrupted with the preempting interrupt.

In this manner, as was discussed above in reference to FIG. 1, the speculative pushing and pushing can continue where the pushing for the previous interrupt left off such that only the additional GPRs need to be pushed (and the CSRs if preempt is one). Since the order of GPRs to be pushed is fixed, regardless of the number of registers needed by each interrupt handler (i.e. by each ipush instruction), it is possible to continue pushing with the current value of xptr, regardless of whether the preempting interrupt occurs during the speculative fetching or non-speculative fetching. Therefore, as with the example of FIG. 1, the value of xptr at time t2 would be 7 (or be a pointer value which points to the 7^{th} GPR in the fixed order), and therefore, the pushing for the next handler (for interrupt 2) can continue with xptr = 8 then 9 then 10 to complete the pushing. For interrupt 2, note that part of the remaining GPRs can continue to be speculatively pushed at block 308 until the first handler instruction for interrupt 2 is fetched, just as described above with respect to the speculative pushing for the first interrupt which was preempted.

Referring now to portion 300b of FIG. 4, the handler of block 316 continues to execute, so long as an ipopret instruction is not reached (current instruction != ipopret). Upon executing the ipopret, at block 340, it is determined whether the value of the preempt field of the ipopret instruction is one or zero. If it is a one, then, at block 342, interrupts are disabled (xIE=0) and, at block 344, the CSRs are popped off the stack. If the value of preempt is a zero ("!preempt") at block 340 or after block 344, it is determined whether another valid interrupt from interrupt controller 210 is pending. If not (id_pend not valid), then, at block 348, the GPRs are sequentially popped from the stack in reverse of the fixed order of GPRs, in which xptr is decremented by one after each pop. Next, at block 350, the SP is restored and the xret portion of the ipopret instruction is executed. This returns to the previous lower exception level execution at block 352 (which can be a lower level handler which was previously executing or a main program which was interrupted). That is, xret returns the PC to xepc, which represents the value of the PC when the interrupt occurred.

Either at block 346, or during the popping of GPRs at block 348, a valid interrupt pending may be received from interrupt controller 210. In this case, at block 354, tail-chaining is implemented in which the current interrupt is set to the received pending interrupt (id = id_pend), and the SP is restored accordingly. As described above in the example of FIG. 1, with tail-chaining, any popping of GPRs performed at block 348 decreases xptr accordingly, which allows for the remaining unpopped GPRs to remain on the stack, as needed, for the next handler, and then allows the proper number of GPRs to be popped at the end of the next handler.

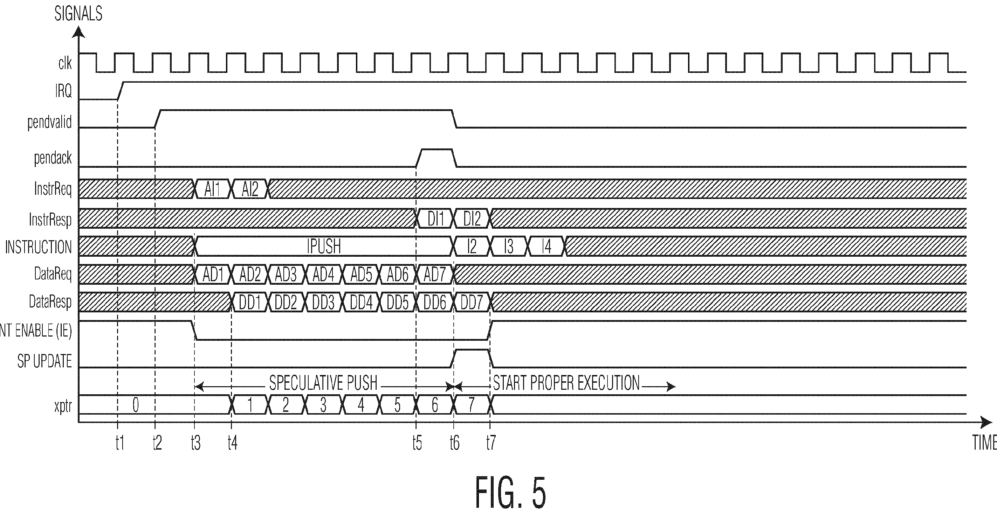

FIG. 5 illustrates a timing diagrams of various signals within processor 202 during interrupt processing with speculative register pushes, in accordance with one embodiment of the present invention. The signals includes a system clock (clk) of processor 202. At time t1, an IRQ is received by interrupt controller 210 which provides a valid pending interrupt (id_pend) to processor 202 at time t2 (in which xptr is reset to 0). At time t3, in response to the received interrupt, a fetch of the interrupt handler begins (i.e. is initiated) by sending the address for a first handler instruction (AI1) as an instruction request (InstrReq) to memory (can be the cache or a memory on system interconnect 204, as was described above). At time t3, in addition to initiating the fetch of the interrupt handler, interrupts are disabled (xlE=0) and speculative pushes of GPRs onto the stack are also initiated (prior to completing the fetch of I1). Therefore, at time t3, the address for the first GPR (AD1) is provided as a data request (DataReq). At time t4, as a response (DataResp) to the DataReq, the data for the first GPR (DD1) is returned and pushed onto the stack and xptr is incremented to 1. At time t4, the next speculative push of a GPR is performed by providing the address for the next (second) GPR (AD2) as the DataReq. Therefore, the next data (DD2) is received as the DataResp and pushed onto the stack, and xptr is incremented to 2. Note that the speculative pushing of GPRs is performed sequentially in accordance with a fixed GPR ordering, as was described above (e.g. GPR1, 5-7, 10-17,and 28-32). This speculative pushing of GPRs continues until time t6.

At time t5, the first instruction of the handler (DI1) is received as the instruction response (InstrResp) to the previously sent InstrReq (thus completing the fetch of the first handler instruction, I1). Therefore, at time t6, the first ipush instruction has been decoded and executed and the value of reg_list is known. In the illustrated embodiment, it is assumed that the speculative fetch pushed the GPRs required by the value of reg_list. Had it not, then additional GPRs would be non-speculatively pushed starting at time t6. However, since the speculative GPRs have all been fetched for the handler, proper execution of the interrupt handler begins at time t6 with the next instruction for the handler, I2 (which was returned as the InstrResp to the InstrReq of I2 (AI2) previously sent at time t4. The handler execution continues with I2, I3, and I4. Therefore, it can be seen how, in this example, the speculative fetching reduced interrupt latency, because without the speculative fetching, the pushing of the GPRs onto the stack for the ipush instruction would not have begun until time t6, at which point the first instruction (ipush) is known (which occurs upon receiving DI1 as the InstrResp) and any pushing of GPRs is therefore non-speculative. At time t6, the SP is also updated, and, at time t7, interrupts are again enabled.

Therefore, by now it can be understood how the use of speculative pushing in accordance with a fixed register order can be used to reduce interrupt latency. Further, the use of a register tracking value (a count value or pointer to keep track of a next register in the fixed register order) allows for effective late preemption and tail chaining, in light of the speculative pushing. In one aspect, the speculative pushing of registers is initiated in response to an interrupt, prior to fetching the first interrupt instruction (or prior to completing the fetching of the first interrupt instruction). Once the first interrupt instruction is received and it is known which registers are needed on the stack for execution of the interrupt handler, the register tracking value is used to either continue pushing registers (non-speculatively) onto the stack for the handler, or to determine that sufficient registers have already been pushed. Execution of the interrupt handler can then continue. Note that the register tracking value can also be used to manage preemption by a higher priority interrupt during the speculative or non-speculative pushing of the registers onto the stack, as well as to manage the speculative or non-speculative pushing of registers for a subsequent interrupt received during execution of the handler (after interrupts have been again enabled). In this manner, improved register stacking is achieved, thereby reducing interrupt latency, which may therefore result in improved overall processor performance.

A processor includes fetch circuitry configured to fetch instructions and a speculation control circuit. The fetch circuitry is configured to, in response to a first interrupt received by the processor, fetch a first interrupt handler instruction for the received first interrupt. The speculation control circuit is configured to, in response to the first interrupt received by the processor, begin speculative pushing of registers onto a memory stack in accordance with a predetermined register order prior to completion of the fetch of the first interrupt handler instruction for the first interrupt, in which a register tracking value is updated with each speculative push.

As used herein, the term "bus" is used to refer to a plurality of signals or conductors which may be used to transfer one or more various types of information, such as data, addresses, control, or status. The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

The terms "assert" and "negate" (or "deassert") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Each signal described herein may be designed as positive or negative logic, where negative logic can be indicated by a bar over the signal name or an asterisk (*) following the name. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Brackets are used herein to indicate the conductors of a bus or the bit locations of a value. For example, "bus 60 [7:0]" or "conductors [7:0] of bus 60" indicates the eight lower order conductors of bus 60, and "address bits [7:0]" or "ADDRESS [7:0]" indicates the eight lower order bits of an address value. The symbol "$" preceding a number indicates that the number is represented in its hexadecimal or base sixteen form. The symbol "%" preceding a number indicates that the number is represented in its binary or base two form.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention has been described with respect to specific conductivity types or polarity of potentials, skilled artisans appreciated that conductivity types and polarities of potentials may be reversed.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Some of the above embodiments, as applicable, may be implemented using a variety of different information processing systems. For example, although FIG. 2 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Also for example, in one embodiment, the illustrated elements of system 200 are circuitry located on a single integrated circuit or within a same device. Alternatively, system 200 may include any number of separate integrated circuits or separate devices interconnected with each other. For example, any of memories 206 or peripherals 208 may be located on a same integrated circuit as processor 202 or on a separate integrated circuit or located within another peripheral discretely separate from other elements of system 200.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, while a particular ordering of GPRs was provided as the fixed order in the descriptions above (GPRs 1, 5-7, 10-17, and 28-31), a processor may implement a different fixed order can be defined and used by speculation control 228 to implement the speculative pushing and the non-speculative pushing in response to an ipush instruction. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In an embodiment, a processor includes fetch circuitry configured to fetch instructions, wherein the fetch circuitry is configured to, in response to a first interrupt received by the processor, fetch a first interrupt handler instruction for the received first interrupt; and a speculation control circuit configured to, in response to the first interrupt received by the processor, begin speculative pushing of registers onto a memory stack in accordance with a predetermined register order prior to completion of the fetch of the first interrupt handler instruction for the first interrupt, wherein a register tracking value is updated with each speculative push. In one aspect, the predetermined register order includes a predetermined register order of general purpose registers (GPRs) of the processor. In another aspect, the register tracking value represents a count value of a number of registers pushed onto the memory stack. In a further aspect, the register tracking value is provided by a counter within the speculation control circuit. In another further aspect, the register tracking value is provided by a pointer value which points to a list of registers in the predetermined register order. In another aspect of the above embodiment, the speculative pushing is begun prior to execution of the first interrupt handler instruction. In another aspect, the processor further includes execution circuitry, wherein the first handler instruction is a register push instruction and the execution circuitry is configured to, when executing the register push instruction, non-speculatively push registers for the register push instruction onto the memory stack in accordance with the predetermined register order, wherein the speculation control circuit continues to update the register tracking value with each non-speculative push for the register push instruction. In a further aspect, the non-speculative pushing of the registers in response to the register push instruction continues with a register of the predetermined register order indicated by the register tracking value, such that a first portion of registers in the predetermined register order is speculatively pushed prior to completion of the fetch of the first interrupt handler instruction and a second portion of registers in the predetermined register order is non-speculatively pushed in response to executing the first interrupt handler instruction, wherein the first and second portions of registers do not overlap. In yet a further aspect, the non-speculatively pushing the registers in response to executing the register push instruction is continued until a total number of registers has been pushed, wherein the total number is indicated by the register push instruction. In another further aspect, the speculative pushing of registers prior to the completion of the fetch of the first interrupt handler instruction continues until a predetermined maximum number of speculative pushes has been reached. In another further aspect, the fetch circuitry is configured to, in response to a second interrupt received by the processor with a greater priority than the first interrupt, fetch a first interrupt handler instruction for the received second interrupt, wherein the speculative control circuit is configured to use the register tracking value to continue speculative pushing of registers onto the memory stack in accordance with the predetermined register order prior to completion of the fetch of the first interrupt handler instruction for the second interrupt, wherein the register tracking value continues to be updated with each speculative push. In yet another further aspect, the fetch circuitry is configured to fetch a second interrupt handler instruction for the first interrupt, wherein the second interrupt handler instruction for the first interrupt is a register pop instruction, and the execution circuitry is configured to, when executing the register pop instruction, pop registers from the memory stack in accordance with the predetermined register order in reverse, wherein the speculation control circuit updates the register tracking value with each pop. In a further aspect, the execution circuitry is further configured to, when executing the register push instruction, after non-speculatively pushing registers for the register push instruction onto the memory stack in accordance with the predetermined register order, selectively push control and status registers onto the memory stack based on a preempt field of the register push instruction, and, when executing the register pop instruction, prior to popping registers from the memory stack in accordance with the predetermined register order in reverse, selectively pop the control and status registers based on a preempt field of the register pop instruction. In another further aspect, the speculation control circuit is configured to, in response to a second interrupt received by the processor during execution of the register pop instruction, initiate a fetch of a first interrupt handler instruction for the second interrupt; and speculatively push additional registers onto the memory stack in accordance with the predetermined register order starting from a previously pushed register as indicated by the register tracking value, and updating the register tracking value with each additional register push, wherein the speculative pushing of the additional registers is performed prior to completing the fetching of the first interrupt handler instruction for the second interrupt.

In another embodiment, a method in a processor includes receiving a first interrupt during execution of a main program; in response to the receiving the first interrupt, initiating a fetch of a first interrupt handler instruction for the first interrupt and initiating speculative pushing of general purpose registers (GPRs) onto a memory stack in accordance with a predetermined register order, wherein at least one GPR is speculatively pushed prior to completion of the fetch of the first interrupt handler instruction for the first interrupt; incrementing a register tracking value with each GPR that is speculatively pushed; completing the fetch of the first interrupt handler instruction, wherein the first interrupt handler instruction comprises a register push instruction which indicates a number of GPRs to be pushed for handling the first interrupt; and non-speculatively pushing GPRs in response to the register push instruction onto the memory stack in accordance with the predetermined register order while a total number of speculatively and non-speculatively pushed GPRs is less than the number of GPRs indicated by the register push instruction, wherein the register tracking value is further incremented with each GPR that is non-speculatively pushed. In one aspect, the speculative pushing of registers prior to the completion of the fetch of the first interrupt handler instruction continues until a predetermined maximum number of speculative pushes has been reached. In another aspect, the method further includes receiving a second interrupt while speculatively pushing or non-speculatively pushing of GPRs onto the stack, wherein the second interrupt has a higher priority than the first interrupt; and, in response to receiving the second interrupt, initiating a fetch of a first interrupt handler instruction for the second interrupt, and using the register tracking value to continue speculative pushing of GPRs onto the memory stack in accordance with the predetermined register order, prior to completion of the fetch of the first interrupt handler instruction for the second interrupt, wherein the register tracking value continues to be incremented with each GPR that is speculatively pushed in response to receiving the second interrupt. In another aspect of the another embodiment, the method further includes executing a second interrupt handler instruction for the first interrupt, wherein the second interrupt handler instruction comprises a register pop instruction; popping GPRs from the memory stack in accordance with the predetermined register order in reverse; and decrementing the register tracking value with each GPR that is popped in response to the register pop instruction. In a further aspect, the method further includes receiving a second interrupt while popping registers in response to the register pop instruction; in response to receiving the second interrupt, initiating a fetch of a first interrupt hander instruction for the second interrupt and speculatively pushing additional GPRs onto the memory stack in accordance with the predetermined register order starting from a previously pushed register as indicated by the register tracking value; and incrementing the register tracking value with each additional register push. In another aspect, the register tracking value represents a count value of a number of registers pushed onto the memory stack.

## Claims

1. A processor, comprising:
fetch circuitry configured to fetch instructions, wherein the fetch circuitry is configured to, in response to a first interrupt received by the processor, fetch a first interrupt handler instruction for the received first interrupt; and
a speculation control circuit configured to, in response to the first interrupt received by the processor, begin speculative pushing of registers onto a memory stack in accordance with a predetermined register order prior to completion of the fetch of the first interrupt handler instruction for the first interrupt, wherein a register tracking value is updated with each speculative push.

2. The processor of claim 1, wherein the predetermined register order comprises a predetermined register order of general purpose registers (GPRs) of the processor.

3. The processor of claim 1, wherein the register tracking value represents a count value of a number of registers pushed onto the memory stack.

4. The processor of claim 3, wherein the register tracking value is provided by a counter within the speculation control circuit.

5. The processor of claim 3 or 4, wherein the register tracking value is provided by a pointer value which points to a list of registers in the predetermined register order.

6. The processor of any preceding claim, wherein the speculative pushing is begun prior to execution of the first interrupt handler instruction.

7. The processor of any preceding claim, further comprising execution circuitry, wherein the first handler instruction is a register push instruction and the execution circuitry is configured to, when executing the register push instruction, non-speculatively push registers for the register push instruction onto the memory stack in accordance with the predetermined register order, wherein the speculation control circuit continues to update the register tracking value with each non-speculative push for the register push instruction.

8. The processor of claim 7, wherein the non-speculative pushing of the registers in response to the register push instruction continues with a register of the predetermined register order indicated by the register tracking value, such that a first portion of registers in the predetermined register order is speculatively pushed prior to completion of the fetch of the first interrupt handler instruction and a second portion of registers in the predetermined register order is non-speculatively pushed in response to executing the first interrupt handler instruction, wherein the first and second portions of registers do not overlap.

9. The processor of claim 8, wherein the non-speculatively pushing the registers in response to executing the register push instruction is continued until a total number of registers has been pushed, wherein the total number is indicated by the register push instruction.

10. The processor of any of claims 7 to 9, wherein the speculative pushing of registers prior to the completion of the fetch of the first interrupt handler instruction continues until a predetermined maximum number of speculative pushes has been reached.

11. The processor of any of claims 7 to 10, wherein the fetch circuitry is configured to, in response to a second interrupt received by the processor with a greater priority than the first interrupt, fetch a first interrupt handler instruction for the received second interrupt, wherein the speculative control circuit is configured to use the register tracking value to continue speculative pushing of registers onto the memory stack in accordance with the predetermined register order prior to completion of the fetch of the first interrupt handler instruction for the second interrupt, wherein the register tracking value continues to be updated with each speculative push.

12. The processor of any of claims 7 to 11, wherein the fetch circuitry is configured to fetch a second interrupt handler instruction for the first interrupt, wherein the second interrupt handler instruction for the first interrupt is a register pop instruction, and the execution circuitry is configured to:
when executing the register pop instruction, pop registers from the memory stack in accordance with the predetermined register order in reverse, wherein the speculation control circuit updates the register tracking value with each pop.

13. The processor of claim 12, wherein the execution circuitry is further configured to:
when executing the register push instruction, after non-speculatively pushing registers for the register push instruction onto the memory stack in accordance with the predetermined register order, selectively push control and status registers onto the memory stack based on a preempt field of the register push instruction; and
when executing the register pop instruction, prior to popping registers from the memory stack in accordance with the predetermined register order in reverse, selectively pop the control and status registers based on a preempt field of the register pop instruction.

14. The processor of claim 12 or 13, wherein the speculation control circuit is configured to, in response to a second interrupt received by the processor during execution of the register pop instruction:
initiate a fetch of a first interrupt handler instruction for the second interrupt; and speculatively push additional registers onto the memory stack in accordance with the predetermined register order starting from a previously pushed register as indicated by the register tracking value, and updating the register tracking value with each additional register push, wherein the speculative pushing of the additional registers is performed prior to completing the fetching of the first interrupt handler instruction for the second interrupt.

15. In a processor, a method comprising:
receiving a first interrupt during execution of a main program;
in response to the receiving the first interrupt:
initiating a fetch of a first interrupt handler instruction for the first interrupt, and
initiating speculative pushing of general purpose registers (GPRs) onto a memory stack in accordance with a predetermined register order, wherein at least one GPR is speculatively pushed prior to completion of the fetch of the first interrupt handler instruction for the first interrupt;
incrementing a register tracking value with each GPR that is speculatively pushed;
completing the fetch of the first interrupt handler instruction, wherein the first interrupt handler instruction comprises a register push instruction which indicates a number of GPRs to be pushed for handling the first interrupt; and
non-speculatively pushing GPRs in response to the register push instruction onto the memory stack in accordance with the predetermined register order while a total number of speculatively and non-speculatively pushed GPRs is less than the number of GPRs indicated by the register push instruction, wherein the register tracking value is further incremented with each GPR that is non-speculatively pushed.

## Amended claims

### Amended claims in accordance with Rule 137(2) EPC.

1. A processor (202), comprising:
fetch circuitry (212) configured to fetch instructions, wherein the fetch circuitry is configured to, in response to a first interrupt received by the processor, fetch (306) a first interrupt handler instruction for the received first interrupt; and
a speculation control circuit (228) configured to, in response to the first interrupt received by the processor, begin speculative pushing (308) of registers onto a memory stack in accordance with a predetermined register order prior to completion of the fetch of the first interrupt handler instruction for the first interrupt, wherein a register tracking value is updated with each speculative push,
wherein the fetch circuitry is configured to, in response to a second interrupt received by the processor with a greater priority than the first interrupt, fetch a first interrupt handler instruction for the received second interrupt,
wherein the speculation control circuit is configured to use the register tracking value to continue speculative pushing of registers onto the memory stack in accordance with the predetermined register order prior to completion of the fetch of the first interrupt handler instruction for the second interrupt,
wherein the register tracking value continues to be updated with each speculative push.

2. The processor of claim 1, wherein the predetermined register order comprises a predetermined register order of general purpose registers (GPRs) of the processor.

3. The processor of claim 1, wherein the register tracking value represents a count value of a number of registers pushed onto the memory stack.

4. The processor of claim 3, wherein the register tracking value is provided by a counter within the speculation control circuit.

5. The processor of claim 3 or 4, wherein the register tracking value is provided by a pointer value which points to a list of registers in the predetermined register order.

6. The processor of any preceding claim, wherein the speculative pushing is begun prior to execution of the first interrupt handler instruction.

7. The processor of any preceding claim, further comprising execution circuitry (216), wherein the first handler instruction is a register push instruction and the execution circuitry is configured to, when executing the register push instruction, non-speculatively push registers for the register push instruction onto the memory stack in accordance with the predetermined register order, wherein the speculation control circuit continues to update the register tracking value with each non-speculative push for the register push instruction.

8. The processor of claim 7, wherein the non-speculative pushing of the registers in response to the register push instruction continues with a register of the predetermined register order indicated by the register tracking value, such that a first portion of registers in the predetermined register order is speculatively pushed prior to completion of the fetch of the first interrupt handler instruction and a second portion of registers in the predetermined register order is non-speculatively pushed in response to executing the first interrupt handler instruction, wherein the first and second portions of registers do not overlap.

9. The processor of claim 8, wherein the non-speculatively pushing the registers in response to executing the register push instruction is continued until a total number of registers has been pushed, wherein the total number is indicated by the register push instruction.

10. The processor of any of claims 7 to 9, wherein the speculative pushing of registers prior to the completion of the fetch of the first interrupt handler instruction continues until a predetermined maximum number of speculative pushes has been reached.

11. The processor of any of claims 7 to 10, wherein the fetch circuitry is configured to fetch a second interrupt handler instruction for the first interrupt, wherein the second interrupt handler instruction for the first interrupt is a register pop instruction, and the execution circuitry is configured to:
when executing the register pop instruction, pop registers from the memory stack in accordance with the predetermined register order in reverse, wherein the speculation control circuit updates the register tracking value with each pop.

12. The processor of claim 11, wherein the execution circuitry is further configured to:
when executing the register push instruction, after non-speculatively pushing registers for the register push instruction onto the memory stack in accordance with the predetermined register order, selectively push control and status registers onto the memory stack based on a preempt field of the register push instruction; and
when executing the register pop instruction, prior to popping registers from the memory stack in accordance with the predetermined register order in reverse, selectively pop the control and status registers based on a preempt field of the register pop instruction.

13. The processor of claim 11 or 12, wherein the speculation control circuit is configured to, in response to a second interrupt received by the processor during execution of the register pop instruction:
initiate a fetch of a first interrupt handler instruction for the second interrupt; and
speculatively push additional registers onto the memory stack in accordance with the predetermined register order starting from a previously pushed register as indicated by the register tracking value, and updating the register tracking value with each additional register push, wherein the speculative pushing of the additional registers is performed prior to completing the fetching of the first interrupt handler instruction for the second interrupt.

14. A method comprising:
fetch circuitry (212) of a processor, in response to a first interrupt received by the processor, fetching (306) a first interrupt handler instruction for the received first interrupt; and
a speculation control circuit (228) of the processor, in response to the first interrupt received by the processor, beginning speculative pushing (308) of registers onto a memory stack in accordance with a predetermined register order prior to completion of the fetch of the first interrupt handler instruction for the first interrupt, wherein a register tracking value is updated with each speculative push;
the fetch circuitry, in response to a second interrupt received by the processor with a greater priority than the first interrupt, fetching a first interrupt handler instruction for the received second interrupt; and
the speculation control circuit using the register tracking value to continue speculative pushing of registers onto the memory stack in accordance with the predetermined register order prior to completion of the fetch of the first interrupt handler instruction for the second interrupt,
wherein the register tracking value continues to be updated with each speculative push.
